Europäisches Patentamt

European Patent Office

Office européen des brevets

(11) Veröffentlichungsnummer: **0 265 827**
**A2**

(12) **EUROPÄISCHE PATENTANMELDUNG**

(21) Anmeldenummer: **87115412.6**

(22) Anmeldetag: **21.10.87**

(51) Int. Cl.⁴ **G07C 9/00**

(30) Priorität: **25.10.86 DE 3636414**

(43) Veröffentlichungstag der Anmeldung:
**04.05.88 Patentblatt `88/18**

(84) Benannte Vertragsstaaten:
**AT CH GB LI**

(71) Anmelder: **Messerschmitt-Bölkow-Blohm
Gesellschaft mit beschränkter Haftung
Robert-Koch-Strasse
D-8012 Ottobrunn(DE)**

(72) Erfinder: **Freisleben, Horst, Dr.
Nockherweg 19
D-8018 Grafing(DE)**

(54) **Kontrollsystem zur Identifizierung von Personen und Objekten.**

(57) Die Erfindung bezieht sich auf ein Kontrollsystem zur Identifizierung von Personen (1) und Objekten mit einer Ausweiskarte (4) für die Person oder das Objekt, die identifizierende Merkmale trägt, sowie mit einer Lese-und Auswerteeinrichtung (18,23) zum Auslesen und Auswerten der auf der Ausweiskarte (4) vorhandenen identifizierenden Merkmale. Um eine einfache und rasche Kontrolle zu ermöglichen, weist die Lese-und Auswerteeinrichtung (18, 23) eine Lichtquelle (5) sowie einen Lichtempfänger (9) mit nachgeschalteter Auswerteelektronik (19 bis 23) auf. Die Ausweiskarte (4) trägt einen modulierbaren Retroreflektor (8) für die von der Lichtquelle (5) ausgesandte Lichtstrahlung, wobei die identifizierenden Merkmale durch diese Modulation festgelegt sind.

FIG. 1

EP 0 265 827 A2

## Kontrollsystem zur Identifizierung von Personen und Objekten

Die Erfindung bezieht sich auf ein Kontrollsystem zur Identifizierung von Personen und Objekten gemäß dem Oberbegriff des Patentanspruches 1.

Aus Sicherheitsgründen ist es oft wünschenswert, daß Areale von z. B. Firmen, Kraftwerken, Lagern usw. nur von berechtigten Pesonen betreten werden können. Neben entsprechenden Absperrungen dieser Areale sind hierzu z. B. an Toren Zutrittskontrollen vorgesehen, die entweder in Händen von Pförtnern oder anderem Wachpersonal liegen, aber auch seit geraumer Zeit automatisch durchgeführt werden. Die automatische Kontrolle hat sich gerade bei einem großen und schnell zu kontrollierenden Personenkreis unter anderem auch aus erhöhten Sicherheits-und Rationalisierungsansprüchen mehr und mehr durchgesetzt. Diese Zutrittskontrollen bestehen z. B. aus einer automatischen Tür, die von einer Kontrolleinheit gesteuert wird. Von der Kontrolleinheit wird zumeist der Besitz einer gültigen Ausweiskarte geprüft, die der Zutretende in eine entsprechende Lese-und Auswerteeinrichtung stecken oder auf diese legen muß. Die Ausweiskarte trägt identifizierende Merkmale, die von der Lese-und Auswerteeinrichtung überprüft werden. Wird bei der Überprüfung festgestellt, daß der Träger der Ausweiskarte zum berechtigten Pesonenkreis gehört, so wird der Zutritt gewährt, indem z. B. die automatische Tür betätigt wird. Anderenfalls erfolgt z.B. eine Nachkontrolle durch das Wachpersonal oder die Ausweiskarte wird nach ein-oder mehrfachen Versuchen einbehalten.

Die für diese Überprüfung notwendige Prozedur des Auslegens der Ausweiskarte wird oft als zeitraubend, umständ lich und aufwendig empfunden, ganz besonders dann, wenn die Ausweiskarte im betreffenden Areal sichtbar getragen werden soll und damit zu der Überprüfung immer abgenommen und anschließend wieder angesteckt werden muß.

Man hat deshalb schon früh nach einem Kontrollsystem gesucht, das den Besitz einer gültigen Ausweiskarte berührungslos und sozusagen auf Distanz prüfen kann. Als Lösung dieses Problems wurde ein System auf Funkbasis entwickelt und vor etlichen Jahren auch in den Handel gebracht.

Für den Zutritt in das zu kontrollierende und zu schützende Areal muß der Zutretende den Wirkungsbereich eines langwelligen Hochfrequenzfeldes betreten, indem er z.B. durch eine Schleuse gehen muß. Die Ausweiskarte spricht auf die langwellige Hochfrequenz an und weist z. B. eine Induktionsspule auf, die die induzierte Energie zum Betrieb eines kleinen Senders verwendet, der dann die codierten Ausweisdaten entsprechend der identifizierenden Merkmale an einem Empfänger auf der Geberseite zurücksendet, wo sie in üblicher Weise geprüft werden; vgl. Firmenprospekt "Zugangskontrolle System NEDAP XS der Fa. Esser Sicherheitstechnik GmbH, D-4040 Neuss 21 vom April 1982.

Ein Nachteil dieses Verfahrens ist die geringe Reichweite des Hochfrequenzfeldes, die nur ca. 70 cm beträgt. Weiterreichende Hochfrequenzfelder sind nicht anwendbar, da hier mit Frequenzen gearbeitet werden muß, die durch eine Kommission zur Verteilung der Funkfrequenzen, im allgemeinen die Post, zum freien Gebrauch zur Verfügung gestellt sind. Diese geringe Reichweite bringt unter anderem oft auch bauliche Probleme bei der Auslegung der Schleusen bzw. Pforten mit sich. Ebenso wird dadurch eine automatische Kontrolle im Areal oder in Gebäuden er schwert.

Ein weiterer Nachteil ist auch die relativ klobige und schwere Bauform der hierfür notwendigen Ausweiskarten sowie deren relativ hoher Preis.

Außerdem versagt dieses Kontrollsystem prinzipiell bei der Kontrolle von Personen in Fahrzeugen.

Der Erfindung liegt die Aufgabe zugrunde, ein in der Konzeption einfaches und kostengünstiges Kontrollsystem anzugeben, mit dem eine einfache Kontrolle der Ausweiskarte auf Distanz möglich ist.

Diese Aufgabe ist gemäß der Erfindung durch die kennzeichnenden Merkmale des Patentanspruches 1 gelöst.

Demgemäß erfolgt die Kontrolle auf optoelektronischem Wege, wobei die Ausweiskarte angestrahlt wird und mit Hilfe eines modulierbaren Retroreflektors das Licht in Richtung auf einen Empfänger der Lese-und Auswerteeinrichtung zurückstrahlt. Durch die Modulation des Retroreflektors werden die identifizierenden Merkmale festgelegt, die in der Lese-und Auswerteeinrichtung elektronisch überprüft werden; es kann z. B. Polarisations-oder Streumodulation verwendet werden.

Die Modulation des Retroreflektors kann fest eingeprägt sein und z. B. in einer Intensitätsmodulation bestehen, so daß das rückgestrahlte Licht eine Intensitätsverteilung nach Art eines Musters aufweist, das die identifizierenden Merkmale festlegt und in der Lese-und Auswerteeinrichtung überprüft wird. Die Modulation wird z. B. dadurch festgelegt, daß der Retroreflektor über seine Fläche unterschiedliche Reflektionseigenschaften aufweist.

Es ist jedoch auch möglich, die Modulation des Retroreflektors durch eine in der Ausweiskarte integrierte und programmierbare Modulationsschaltung festzulegen. Hierzu ist eine Energiequelle in der Ausweiskarte notwendig. Gemäß einer bevorzugten Ausführungsform der Erfindung wird die Energie für die Modulationsschaltung und gegebenenfalls weitere in der Ausweiskarte integrierte Elektronik durch Sonnenzellen geliefert, die vorzugsweise auch auf das die Ausweiskarte bestrahlende Licht der Lichtquelle des Kontrollsystemes ansprechen.

Es versteht sich von selbst, daß das Licht der Lichtquelle personenverträglich und insbesondere augenschonend sein muß: Hierzu bieten sich Lichtquellen an, die im Infrarotbereich strahlen.

Die mit dem Kontrollsystem gemäß der Erfindung erzielbaren relativ großen Reichweiten zusammen mit einer guten räumlichen Selektivität des ausgesandten breit gefächerten Lichtbündels bringen Vorteile bei der Auslegung von Pforten und Einfahrten in zu kontrollierende Areale und ermöglichen automatische punktuelle Kontrollen im Inneren des gesicherten Areals ohne aufwendige bauliche Maßnahmen.

Ebenso ist die Kontrolle von Fahrzeuginsassen durch die Fenster des Fahrzeuges prinzipiell möglich.

Die flache, leichte und einheitliche Bauweise der Retroreflektoren und der Sonnenzellen, deren günstiger Preis sowie deren geringer Stromverbrauch sind weitere Konstruktionsvorteile, die das Kontrollsystem gemäß der Erfindung auszeichnet. Die hierzu notwendigen Ausweiskarten unterscheiden sich in der Größe praktisch nicht von bisher üblichen Ausweiskarten.

Außerdem ist das Kontrollsystem störsicher im Gegensatz zu dem bekannten Funksystem, das durch vagabundierende Strahlung beeinflußt werden kann. Beschränkungen hinsichtlich der Anwendung von Lichtfrequenzen sind sowieso nicht gegeben.

Es ist ferner möglich, nicht nur Personen zu kontrollieren, sondern auch Objekte, so z. B. Fahrzeuge. In der Produktion und Verteilung von Gütern kann das Kontrollsystem gemäß der Erfindung ebenfalls angewandt werden, indem jedes Gut mit einer Plakette entsprechend der Ausweiskarte versehen wird, deren identifizierenden Merkmale ausgelesen und überprüft werden. So kann z. B. bei der Fließbandproduktion von Autos jedes Auto eine solche Plakette tragen, auf der identifizierende Merkmale entsprechend speziellen Fertigungsinformationen vorgegeben sind.

Gemäß einer bevorzugten Ausführungsform der Erfindung wird das Kontrollsystem selbstprüfend ausgeführt. Hierzu wird im Kontrollbereich eine Testausweiskarte mit gleicher Auslegung wie die sonstigen Ausweiskarten montiert, die ständig von dem breitgefächerten Lichtbündel der Lichtquelle bestrahlt wird und das Licht über den Retroreflektor an den Empfänger der Geberseite reflektiert. Diese Selbstprüfung wird nur durch den eigentlichen Kontrollvorgang bei der Identifizierung einer Peson oder eines Objektes unterbrochen.

Das beschriebene Kontrollsystem kann auch eine Personenruf-Funktion umfassen, indem z. B. nach der Überprüfung der Ausweiskarte dem Zutretenden ein Signal gegeben wird, aufgrund dessen er sich mit einer Zentralstelle in Verbindung setzt. Durch eine Erweiterung des Kontrollsystemes ist eine solche punktuelle Personen-Ruffunktion auch dadurch erreichbar, daß auf der Geberseite eine mit Hilfe einer Ansteuerelektronik modulierbare Lichtquelle und in der Ausweiskarte eine auf diese Modulation ansprechende Auswerteelektronik vorgesehen ist.

Weitere Ausgestaltungen der Erfindung gehen aus den Unteransprüchen hervor. Die Erfindung ist in einem Ausführungsbeispiel anhand der Zeichnung näher erläutert. In dieser stellen dar:

Fig. 1 eine Prinzipdarstellung eines Kontrollsystemes gemäß der Erfindung für die Zutrittskontrolle einer Person im Bereich einer automatischen Tür;

Fig. 2 eine schematische Aufsicht auf eine Ausweiskarte für ein Kontrollsystem gemäß der Erfindung;

Fig. 3 ein schematisches Blockschaltbild der bei dem Kontrollsystem gemäß der Erfindung verwendeten Optoelektronik.

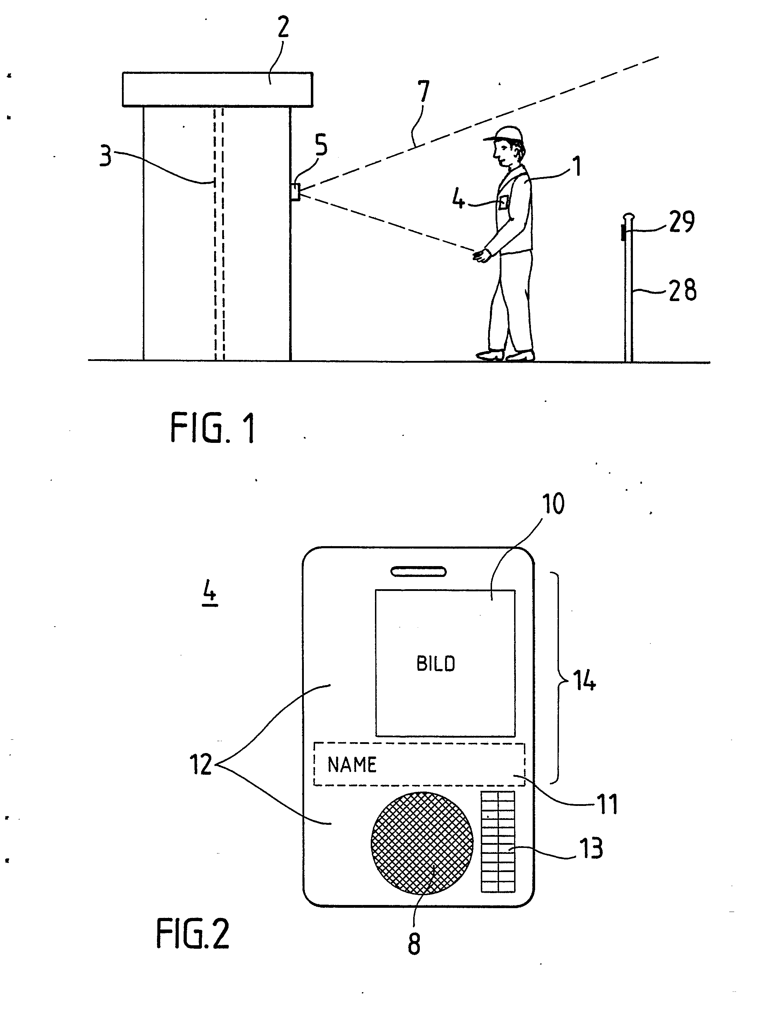

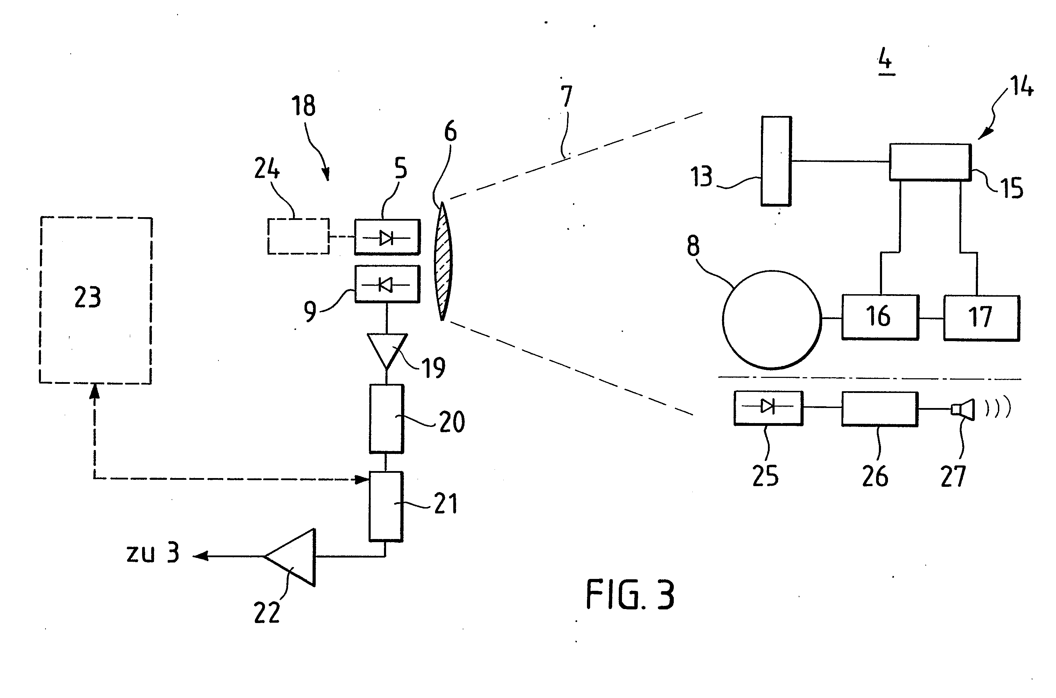

In Fig. 1 ist schematisch eine Zutrittskontrolle dargestellt. Eine Person 1, die durch eine Pforte 2 mit einer gestrichelt angedeuteten automatischen Tür 3 in ein dahinterliegendes Areal eintreten will, trägt offen eine näher in Fig. 2 dargestellte Ausweiskarte 4. An der Pforte ist eine Lichtquelle 5 vorgesehen, z. B. eine Lumineszenzdiode, die über eine einfache Optik 6 (Fig. 3) die Person 1 mit einem relativ breit aufgefächerten Lichtbündel 7 augensicher beleuchtet. Hierbei wird auch die sichtbar getragene Ausweiskarte 4 beleuchtet. Diese weist einen modulierbaren Retroreflektor 8 auf, der das Licht in sich in Richtung auf die Lichtquelle 5 reflektiert. Dieses Licht wird über die Eingangsoptik 6 mit Hilfe eines Empfängers 9 (Fig. 3) empfangen und zu Prüfzwecken verwendet. Ist die Überprüfung positiv, so wird die automatische Tür 3 geöffnet.

Die in Fig. 2 dargestelle Ausweiskarte 4 weist neben dem erwähnten, im unteren Bereich angeordneten Retroreflektor 8 noch ein Bildfeld 10 sowie ein Namensfeld 11 auf, in dem das Bild der Person bzw. deren Name angebracht sind. Außerdem sind noch Flächen 12 zur Beschriftung der Ausweiskarte 4 vorgesehen. Neben dem Retroreflektor 8 ist noch eine Anordnung aus Sonnenzellen 13 gelegen, die die in Fig. 3 gezeigte Elektronik der Ausweiskarte 4 versorgt. Die Elektronik ist in dem mit einer Klammer versehenen Bereich 14 innerhalb der Karte integriert.

In Fig. 3 ist ein schematisches Blockschaltbild des gesamten Kontrollsystemes dargestellt.

Die Solarzellen 13 versorgen einen Energiespeicher 15, der eine Modulatorschaltung 16 und einen Datenspeicher 17 der Elektronik 14 mit Spannung versorgt. Die Modulatorschaltung 16 ist mit dem Retroreflektor 8 verbunden. Die Reflektionseigenschaften des Retroreflektors werden anhand der im Datenspeicher 17 vorliegenden Daten und der Modulationsschaltung 16 moduliert. Diese Modulation ist üblicherweise eine Modulation der Reflektionseigenschaften des Retroreflektors, die taktgesteuert erfolgt. Durch diese Modulation werden die identifizierenden Merkmale für die Person festgelegt, die die Ausweiskarte trägt.

Die erwähnte Lichtquelle 5, der Empfänger 9 und die Optik 6 sind Teil einer Lese-und Auswerteeinrichtung 18, die einen an den Empfänger angeschlossenen Verstärker 19 sowie eine darauffolgende Serienschaltung aus einer Signalaufbereitungsschaltung 20, einer Kontrollogik 21 und einer Treiberschaltung 22 umfaßt. Die Elemente der Lese-und Auswerteeinrichtung 18 werden von einer nicht gezeigten Spannungsquelle versorgt. Die von dem Retroreflektor 8 nach Modulation reflektierte Lichtstrahlung wird in dieser Schaltung signalmäßig aufbereitet, die elektrischen Signale werden in der Kontrollogik 21 anhand vorgegebener Daten ausgewertet. Ist diese Prüfung positiv, so gibt die Treiberschaltung 22 ein Ansteuersignal für die automati sche Tür 3 ab, die sich dann öffnet. Die Kontrollogik 21 kann noch mit einem zentralen Rechner 23 verbunden sein, der etwa die vorgegebenen Daten zur Verfügung stellt und andere Kontroll-und Überwachungsfunktionen ausführt.

Das beschriebene Kontrollsystem kann noch durch einen Modulator 24 innerhalb der Lese-und Auswerteeinrichtung 18 erweitert werden, mit dem die Lichtquelle 5 moduliert wird. Auf Seiten der Ausweiskarte kann optional ein Empfänger 25 mit einer auf die Modulation der Lichtstrahlung ansprechenden Auswerteschaltung 26 vorhanden sein, die z. B. mit einem kleinen Signalgeber 27 verbunden ist. Der Empfänger 25 kann auch in den Retroreflektor 8 integriert sein. Auch diese Zusatzelemente werden selbstverständlich von dem Energiespeicher 15 mit Spannung versorgt.

In Fig. 1 ist schematisch noch eine Möglichkeit zur Selbstprüfung des beschriebenen Kontrolsystemes dargestellt. Im Bereich des aufgefächerten Lichtbündels 7 ist eine stationäre Halterung 28 für eine Testausweiskarte 29 vorgesehen. Diese Testausweiskarte 29 wird beleuchet, sofern sich im Kontrollbereich keine zu identifizierende Person befindet. Die Testausweiskarte 29 hat den gleichen Aufbau wie die beschriebene Ausweiskarte 4, so daß auch von deren Retroreflektor die Lichtstrahlung in sich auf den Lichtempfänger reflektiert wird. Diese reflektierte Strahlung, die die identifizierenden Merkmale der Testausweiskarte 29 beinhaltet, wird auf die gleiche Weise ausgewertet und zur Überprüfung der Funktion der Lese-und Auswerteeinrichtung verwendet.

## Ansprüche

1. Kontrollsystem zur Identifizierung von Personen und Objekten mit einer Ausweiskarte für die Person oder das Objekt, die identifizierende Merkmale trägt, sowie mit einer Lese-und Auswerteschaltung zum Auslesen und Auswerten der auf der Ausweiskarte vorhandenen identifizierenden Merkmale, dadurch gekennzeichnet, daß die Lese-und Auswerteschaltung (18, 23) eine Lichtquelle (5) sowie einen Lichtempfänger (9) mit nachgeschalteter Auswerteelektronik (19 bis 23) und die Ausweiskarte (4) einen modulierbaren Retroreflektor (8) für die von der Lichtquelle (5) ausgesandte Lichtstrahlung aufweist, wobei die identifizierenden Merkmale durch diese Modulation festgelegt sind.

2. Kontrollsystem nach Anspruch 1, dadurch gekennzeichnet, daß die Ausweiskarte (4) eine programmierbare Modulationsschaltung (16, 17) zur Modulation des Retroreflektors (8) aufweist.

3. Kontrollsystem nach Anspruch 2, dadurch gekennzeichnet, daß die Modulationsschaltung, (16, 17) mit einer Sonnenzellenanordnung (13) auf der Ausweiskarte (4) verbunden ist, die auch auf die Lichtstrahlung der Lichtquelle (5) der Lese-und Auswerteeinrichtung (18, 23) anspricht.

4. Kontrollsystem nach einem der vorhergehenden Ansprüche, dadurch gekennzeichnet, daß die Lese-und Auswerteeinrichtung (18, 23) stationär angeordnet ist und die Lichtquelle (5) ein breit gefächertes Lichtbündel (7) abstrahlt.

5. Kontrollsystem nach einem der vorhergehenden Ansprüche, dadurch gekennzeichnet, daß die von der Lichtquelle (5) abgestrahlte Lichtstrahlung im Infrarotbereich liegt.

6. Kontrollsystem nach einem der vorhergehenden Ansprüche, dadurch gekennzeichnet, daß die Lichtquelle (5) der Lese-und Auswerteeinrichtung (18, 23) zur Kennung spezifischer Funktionen mit einem Modulator (24) verbunden ist, und daß die Ausweiskarte (4) einen Empfänger (25) sowie eine auf die Modulation ansprechende Auswertelogik (26) zur Identifizierung der durch die Modulation vorgegebenen speziellen Funktion aufweist.

7. Kontrollsystem nach einem der vorhergehenden Ansprüche, dadurch gekennzeichnet, daß die Lese-und Auswerteeinrichtung (18) mit einem zentralen Rechner (23) verbunden ist.

8. Kontrollsystem nach einem der vorhergehenden Ansprüche, dadurch gekennzeichnet, daß zur Selbstprüfung des Kontrollsystemes im Bereich der Lichtstrahlung (7) der Lichtquelle (5) eine Testausweiskarte (29) gleichen Aufbaues wie die Ausweiskarte (4) stationär angeordnet ist.

FIG. 1

FIG.2

FIG. 3

0 265 827